# EUROPEAN PATENT APPLICATION

(11) **EP 3 220 078 A1**
(43) Date of publication of application: **20.09.2017**
(21) Application number: 17155274.8
(22) Date of filing: 08.02.2017
(51) Int. Cl.: F25B 30/02

(54) **REFRIGERATION CYCLE DEVICE AND HOT WATER HEATING DEVICE PROVIDED WITH THE SAME**

(30) Priority: 14.03.2016 JP 2016049289
(71) Applicant: Panasonic Intellectual Property Management Co., Ltd., Osaka-shi, Osaka 540-6207 (JP)
(72) Inventor: MORIWAKI, Shunji, OSAKA, 540-6207 (JP); AOYAMA, Shigeo, OSAKA, 540-6207 (JP)
(74) Representative: Eisenführ Speiser

(57) **Abstract**

A refrigeration cycle device (1A) according to the present disclosure includes a refrigerant circuit (2) where a compressor (21), a radiator (22), a subcooling heat exchanger (23), a main expansion section (24), and an evaporator (25) are connected in a circular manner, a bypass channel (3) that is branched from the refrigerant circuit between the radiator and the main expansion section, and that passes through the subcooling heat exchanger (23), a bypass expansion section (31) that is provided to the bypass channel, on an upstream side of the subcooling heat exchanger, and a control device (4). The control device increases an opening of the bypass expansion section when a temperature of refrigerant discharged from the compressor is equal to or higher than a temperature that is higher than a saturation temperature by a first predetermined temperature and is lower than a temperature that is lower than an operation upper limit temperature of the compressor by a second predetermined temperature.

## Description

### BACKGROUND

### 1. Technical Field

The present disclosure relates to a refrigeration cycle device that bypasses a part of refrigerant flowing out of a radiator, and that subcools mainstream refrigerant by exchanging heat between the mainstream refrigerant and bypass-flow refrigerant.

### 2. Description of the Related Art

For example, Unexamined Japanese Patent Publication No. H10-68553 proposes, with respect to this type of refrigeration cycle device and hot water heating device, providing a subcooling heat exchanger on a downstream side of a radiator of a refrigerant circuit, and subcooling refrigerant flowing out of the radiator by causing expanded refrigerant to flow into the subcooling heat exchanger.

FIG. 5 shows a conventional refrigeration cycle device described in PTL 1.

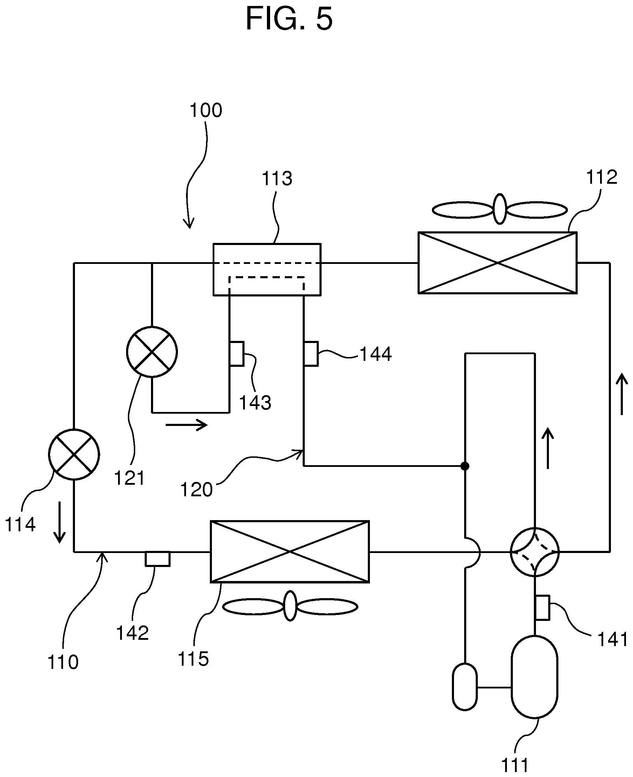

As shown in FIG. 5, refrigeration cycle device 100 includes refrigerant circuit 110 for circulating refrigerant, and bypass channel 120. Refrigerant circuit 110 is configured from compressor 111, radiator 112, subcooling heat exchanger 113, main expansion valve 114, and evaporator 115 which are connected in a circular manner by pipes.

Bypass channel 120 is branched from refrigerant circuit 110 between subcooling heat exchanger 113 and main expansion valve 114, and is connected to refrigerant circuit 110 between evaporator 115 and compressor 111 via subcooling heat exchanger 113. Also, bypass expansion valve 121 is provided to bypass channel 120, on an upstream side of subcooling heat exchanger 113.

Furthermore, refrigeration cycle device 100 includes temperature sensor 141 for detecting temperature (compressor discharge pipe temperature) Td of refrigerant which is discharged from compressor 111, temperature sensor 142 for detecting temperature (evaporator inlet temperature) Te of refrigerant flowing into evaporator 115, temperature sensor 143 for detecting, on bypass channel 120, temperature (bypass-side inlet temperature) Tbi of refrigerant flowing into subcooling heat exchanger 113, and temperature sensor 144 for detecting, on bypass channel 120, temperature (bypass-side outlet temperature) Tbo of refrigerant flowing out of subcooling heat exchanger 113.

Moreover, target temperature Td (target) for the discharge pipe of the compressor is set based on evaporator inlet temperature Te detected by temperature sensor 142. Refrigeration cycle device 100 further includes a main expansion valve controller for controlling main expansion valve 114 so as to cause discharge pipe temperature Td detected by temperature sensor 141 to reach target temperature Td (target), and a bypass expansion valve controller for controlling bypass expansion valve 121 so as to cause difference (Tbo - Tbi) between bypass-side outlet temperature Tbo and bypass-side inlet temperature Tbi at subcooling heat exchanger 113 becomes a predetermined target value.

However, according to the conventional configuration described above, bypass expansion valve 121 operates to control the temperature difference between the inlet side and the outlet side of bypass channel 120, that is, a degree of superheat at the outlet of bypass channel 120, and is not able to control a refrigerant state at the outlet of bypass channel 120 to be a wet state.

Accordingly, when bypass expansion valve 121 is opened during heating operation at a time when an ambient temperature is extremely low at -20°C, for example, refrigerant flowing through bypass channel 120 before a flow rate of refrigerant in bypass channel 120 is increased to an appropriate rate is possibly heated to an excessive degree by subcooling heat exchanger 113, and a sucked refrigerant state at compressor 111 may reach an excessively superheated state. This may result in an abnormal increase in a discharge temperature of compressor 111.

Accordingly, bypass channel 120 may not be used when the ambient temperature is extremely low, and an increase in the operation efficiency due to use of bypass channel 120 cannot be achieved, and there are problems of poor efficiency and not enough heating capacity.

### SUMMARY

The present disclosure is for solving the conventional problems described above, and its object is to provide a refrigeration cycle device which is capable of increasing the heating capacity and efficiency even at a low ambient temperature by swiftly controlling a refrigeration cycle to an appropriate state.

To solve the conventional problems described above, a refrigeration cycle device of the present disclosure includes a refrigerant circuit where a compressor, a radiator, a subcooling heat exchanger, a main expansion section, and an evaporator are connected in a circular manner, a bypass channel that is branched from the refrigerant circuit between the radiator and the main expansion section, and that is connected, via the subcooling heat exchanger, to a compression chamber of the compressor or the refrigerant circuit between the evaporator and the compressor, a bypass expansion section that is provided to the bypass channel, on an upstream side of the subcooling heat exchanger, a saturation temperature detection unit for detecting a saturation temperature of refrigerant discharged from the compressor, a temperature sensor for detecting a temperature of the refrigerant discharged from the compressor, and a control device. The control device increases an opening of the bypass expansion section when the temperature of the refrigerant discharged from the compressor is equal to or higher than a temperature that is higher than the saturation temperature by a first predetermined temperature and is lower than a temperature that is lower than an operation upper limit temperature of the compressor by a second predetermined temperature.

The control device increases the opening of the bypass expansion valve at a temperature that is lower than an operation temperature upper limit value of the compressor by a second predetermined temperature. In this manner, even if superheated refrigerant flows through the bypass channel from a high-pressure side to a low-pressure side and a discharge temperature is drastically increased, the main expansion section and the bypass expansion section are controlled to appropriate openings before the operation upper limit temperature of the compressor is reached, and thus, refrigerant at an outlet of the bypass channel is changed into a saturation state. Therefore, an abnormal increase in the discharge temperature of the compressor may be suppressed.

Particularly, even if the discharge temperature of the compressor is drastically increased at the start of bypassing due to the bypass expansion section being shifted from a closed state to an open state when the refrigerant discharged from the compressor is in a superheated state, the refrigerant at the outlet of the bypass channel is placed in the saturation state. Accordingly, an abnormal increase in the discharge temperature of the compressor may be suppressed, and also, because refrigerant which was dissolved in oil in the compressor is evaporated and there is almost no dissolved refrigerant, oil in the compressor may be prevented from being drastically reduced.

According to the present disclosure, there may be provided a refrigeration cycle device which is capable of increasing the heating capacity and efficiency even at a low ambient temperature by swiftly controlling a refrigeration cycle to an appropriate state.

### BRIEF DESCRIPTION OF THE DRAWINGS

FIG. 1 is a schematic configuration diagram of a refrigeration cycle device according to a first exemplary embodiment of the present disclosure;
FIG. 2 is a diagram showing temperature settings for a discharge temperature of a compressor of the refrigeration cycle device;
FIG. 3 is a Mollier diagram for during operation of the refrigeration cycle device;
FIG. 4 is a diagram showing a flowchart of operation control of the refrigeration cycle device; and
FIG. 5 is a schematic configuration diagram of a conventional refrigeration cycle device.

### DETAILED DESCRIPTION

A refrigeration cycle device according to a first aspect includes a refrigerant circuit where a compressor, a radiator, a subcooling heat exchanger, a main expansion section, and an evaporator are connected in a circular manner, a bypass channel that is branched from the refrigerant circuit between the radiator and the main expansion section, and that is connected, via the subcooling heat exchanger, to a compression chamber of the compressor or the refrigerant circuit between the evaporator and the compressor, a bypass expansion section that is provided to the bypass channel, on an upstream side of the subcooling heat exchanger, a saturation temperature detection unit for detecting a saturation temperature of refrigerant discharged from the compressor, a temperature sensor for detecting a temperature of the refrigerant discharged from the compressor, and a control device. The control device increases an opening of the bypass expansion section when the temperature of the refrigerant discharged from the compressor is equal to or higher than a temperature that is higher than the saturation temperature by a first predetermined temperature and is lower than a temperature that is lower than an operation upper limit temperature of the compressor by a second predetermined temperature.

The control device increases the opening of the bypass expansion valve at a temperature that is lower than an operation temperature upper limit value of the compressor by a second predetermined temperature. In this manner, even if superheated refrigerant flows through the bypass channel from a high-pressure side to a low-pressure side and a discharge temperature is drastically increased, the main expansion section and the bypass expansion section are controlled to appropriate openings before the operation upper limit temperature of the compressor is reached, and thus, refrigerant at an outlet of the bypass channel is changed into a saturation state. Therefore, an abnormal increase in the discharge temperature of the compressor may be suppressed.

Particularly, even if the discharge temperature of the compressor is drastically increased at the start of bypassing due to the bypass expansion section being shifted from a closed state to an open state when the refrigerant discharged from the compressor is in a superheated state, the refrigerant at the outlet of the bypass channel is placed in the saturation state. Accordingly, an abnormal increase in the discharge temperature of the compressor may be suppressed, and also, because refrigerant which was dissolved in oil in the compressor is evaporated and there is almost no dissolved refrigerant, oil in the compressor may be prevented from being drastically reduced.

Accordingly, even when the ambient temperature is extremely low at -20°C, for example, an increased enthalpy difference effect at the evaporator due to heat exchange, at the subcooling heat exchanger, between mainstream refrigerant and refrigerant flowing through the bypass channel, and a pressure drop reduction effect at a refrigerant route on the low-pressure side due to bypassing of the refrigerant from the high-pressure side to the low-pressure side may be utilized. As a result, a higher operation efficiency and sufficient heating capacity may be achieved.

A second aspect is according to the first aspect, where the control device reduces an opening of the main expansion section when increasing the opening of the bypass expansion section to shift the bypass expansion section from the closed state to the open state.

This increases an amount of pressure reduction at the main expansion section, and an increase in an evaporation temperature is prevented. As a result, a refrigerant state at an inlet portion of the bypass expansion section may be swiftly liquefied and the refrigerant at the outlet of the bypass channel may be placed in the saturation state in a short time.

Therefore, the discharge temperature of the compressor may be prevented from being excessively increased with respect to a target temperature.

In a third aspect, when the temperature of the refrigerant discharged from the compressor is equal to or higher than the temperature that is lower than the operation upper limit temperature of the compressor by the second predetermined temperature, the control device changes the opening of the main expansion section to a maximum opening and reduces a rotational speed of the compressor. The "maximum opening" here includes a "substantially maximum opening".

This may reduce power consumption by operation of the compressor. Also, because the amount of pressure reduction at the main expansion section is reduced, evaporation of refrigerant at the evaporator may be suppressed, and enthalpy of refrigerant sucked into the compressor is reduced. The discharge temperature of the compressor may thus be reduced in a short time.

That is, the bypass expansion section is opened after the discharge temperature of the compressor is reduced to an appropriate temperature, and thus, an abnormal increase in the discharge temperature of the compressor may be reliably prevented even in a state where a temperature of the compressor is high, such as at the time of reactivation.

A fourth aspect is a hot water heating device provided with the refrigeration cycle device of any one of the first to the third aspects, and is applicable not only in the case where the radiator is a refrigerant-air heat exchanger, but also in a case where the radiator is a refrigerant-water heat exchanger.

In the following, an exemplary embodiment of the present disclosure will be described with reference to the drawings. Additionally, the present disclosure is not to be limited by the exemplary embodiment.

### FIRST EXEMPLARY EMBODIMENT

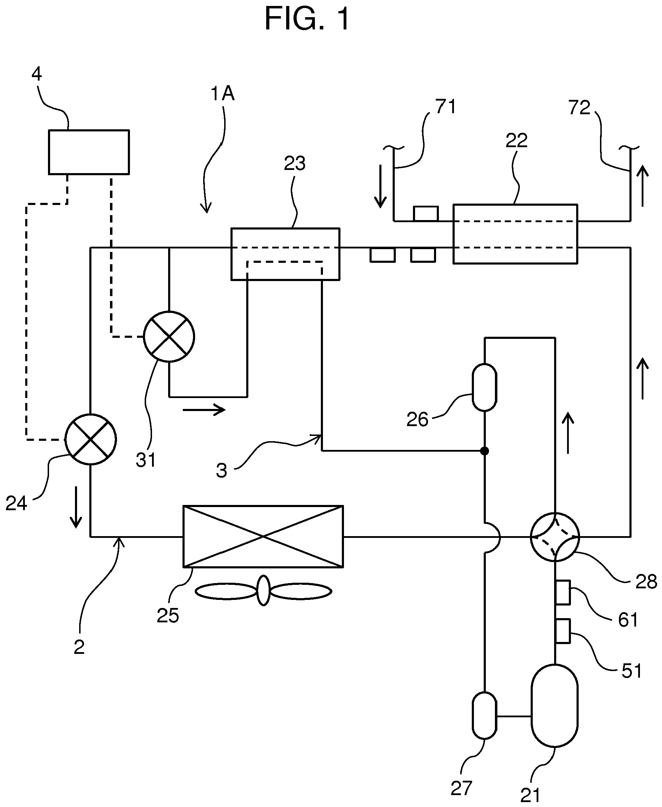

FIG. 1 is a schematic configuration diagram of a refrigeration cycle device and a hot water heating device according to a first exemplary embodiment of the present disclosure.

In FIG. 1, refrigeration cycle device 1A includes refrigerant circuit 2 for circulating refrigerant, bypass channel 3, and control device 4.

As the refrigerant, a non-azeotropic mixed refrigerant such as R407C, a pseudo-azeotropic mixed refrigerant such as R410A, or a single refrigerant such as R32 may be used, for example.

Refrigerant circuit 2 is configured by compressor 21, radiator 22, subcooling heat exchanger 23, main expansion valve (main expansion section) 24, and evaporator 25 which are connected in a circular manner by pipes.

In the present exemplary embodiment, sub-accumulator 26 and main accumulator 27 for performing gas-liquid separation are provided between evaporator 25 and compressor 21. Also, refrigerant circuit 2 is provided with four-way valve 28 for switching between normal operation and defrosting operation.

In the present exemplary embodiment, refrigeration cycle device 1A is heating unit of a hot water heating device which uses hot water generated by the heating unit for heating, and radiator 22 is a heat exchanger for heating water by exchanging heat between refrigerant and water.

Specifically, supply pipe 71 and recovery pipe 72 are connected to radiator 22, and water is supplied to radiator 22 through supply pipe 71, and water (hot water) heated by radiator 22 is recovered through recovery pipe 72.

Hot water recovered through recovery pipe 72 is sent to a heater such as a radiator directly or through a hot water tank, and heating is thus performed.

In the present exemplary embodiment, bypass channel 3 is branched from refrigerant circuit 2 between subcooling heat exchanger 23 and main expansion valve 24, and is connected, via subcooling heat exchanger 23, to refrigerant circuit 2 between sub-accumulator 26 and main accumulator 27, between evaporator 25 and compressor 21.

Moreover, bypass expansion valve (bypass expansion section) 31 is provided to bypass channel 3, on an upstream side of subcooling heat exchanger 23.

Furthermore, refrigerant circuit 2 is provided with pressure sensor 51 (saturation temperature detection unit) for detecting pressure (discharge pressure) Pd of refrigerant discharged from compressor 21, and temperature sensor 61 for detecting temperature (discharge temperature) Td of the refrigerant discharged from compressor 21.

Moreover, control device 4 controls a rotational speed of compressor 21, switching of four-way valve 28, and openings of main expansion valve (main expansion section) 24 and bypass expansion valve (bypass expansion section) 31 based on detection values detected by pressure sensor 51 and temperature sensor 61, for example.

In normal operation, refrigerant that is discharged from compressor 21 is sent to radiator 22 through four-way valve 28. In defrosting operation, refrigerant that is discharged from compressor 21 is sent to evaporator 25 through four-way valve 28. In FIG. 1, a flow direction of refrigerant in the normal operation is indicated by an arrow.

First, a change in a state of refrigerant in the normal operation of refrigeration cycle device 1A of the present exemplary embodiment will be described with reference to FIG. 1.

High-pressure refrigerant that is discharged from compressor 21 flows into radiator 22, and releases heat to water passing through radiator 22. High-pressure refrigerant flowing out of radiator 22 flows into subcooling heat exchanger 23, and is subcooled by low-pressure refrigerant whose pressure is reduced by bypass expansion valve 31. High-pressure refrigerant flowing out of subcooling heat exchanger 23 is dispensed to main expansion valve 24 side and to bypass expansion valve 31 side.

High-pressure refrigerant that is dispensed to main expansion valve 24 side is expanded by having its pressure reduced by main expansion valve 24, and then flows into evaporator 25. Low-pressure refrigerant flowing into evaporator 25 absorbs heat from air at evaporator 25.

For its part, high-pressure refrigerant that is dispensed to bypass expansion valve 31 side is expanded by having its pressure reduced by bypass expansion valve 31, and then flows into subcooling heat exchanger 23. Low-pressure refrigerant flowing into subcooling heat exchanger 23 is heated by high-pressure refrigerant flowing out of radiator 22. Then, low-pressure refrigerant flowing out of subcooling heat exchanger 23 merges with low-pressure refrigerant flowing out of evaporator 25, and is sucked into compressor 21 again.

According to the configuration of refrigeration cycle device 1A of the present exemplary embodiment, the pressure of refrigerant to be sucked into compressor 21 when the ambient temperature is low is reduced and an amount of refrigerant circulation is reduced, and thus, reduction in the heating capacity of radiator 22 may be prevented.

To realize the above, it is important that an enthalpy difference at evaporator 25 is increased by subcooling. In addition, it is also important to suppress an amount of gas-phase refrigerant with low heat absorption effect which flows through a low-pressure part of refrigerant circuit 2 by causing refrigerant to flow through bypass channel 3, and to thereby reduce a pressure drop in the low-pressure part of refrigerant circuit 2.

If a pressure drop in the low-pressure part of refrigerant circuit 2 is reduced, pressure of refrigerant that is sucked into compressor 21 is increased by this amount and a specific volume is reduced, and the amount of refrigerant circulation is thereby increased.

Furthermore, if the enthalpy difference at evaporator 25 is increased, even if a mass flow rate of refrigerant passing through evaporator 25 is reduced by causing refrigerant to pass through bypass channel 3, an amount of heat absorption at evaporator 25 may be maintained.

That is, if the degree of subcooling of refrigerant and the mass flow rate of refrigerant through bypass channel 3 are maximized, a maximum effect to increase the heat capacity of radiator 22 and a maximum effect to increase a coefficient of performance of refrigeration cycle device 1A may be achieved.

However, in the case of utilizing the effect of causing refrigerant to flow through bypass channel 3 when the ambient temperature is extremely low at -20°C, for example, or when a use-side load is small, there is a problem that the discharge temperature of compressor 21 is abnormally increased before the flow rate of refrigerant flowing through bypass channel 3 becomes appropriate.

Accordingly, to increase the efficiency of an appliance by utilizing, under various conditions, the capacity increase effect achieved by causing refrigerant to flow through bypass channel 3, it is important to suppress the abnormal increase in the discharge temperature of compressor 21.

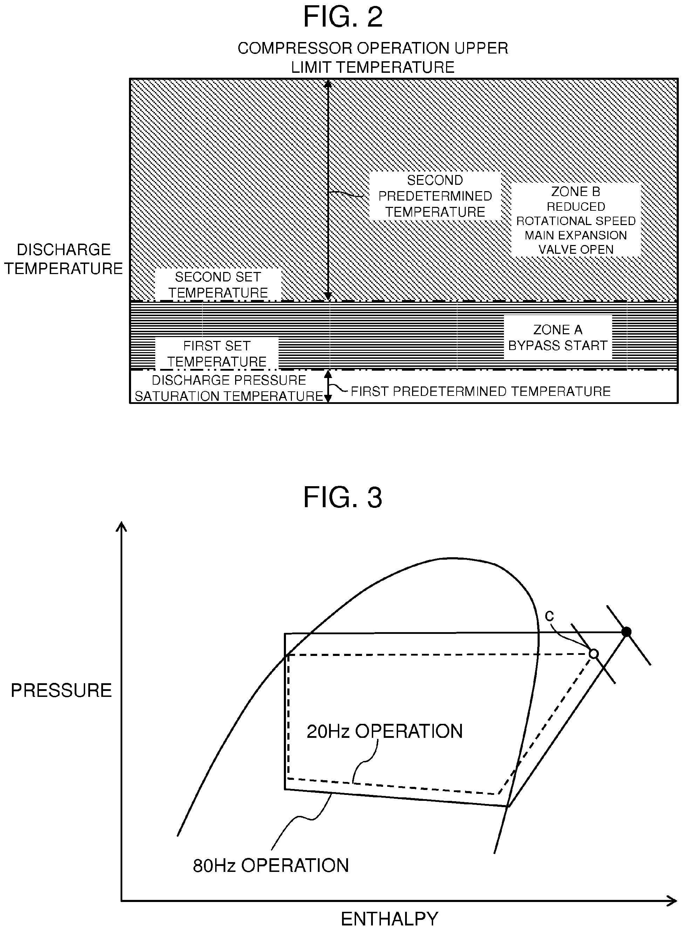

Accordingly, as shown in FIG. 2, in the present exemplary embodiment, control device 4 increases the opening of bypass expansion section 31 from the closed state to the open state and reduces the opening of main expansion valve 24 by a predetermined amount when the discharge temperature of compressor 21 is equal to or higher than a first set temperature, which is higher than the saturation temperature at the discharge pressure by a first predetermined temperature, the discharge temperature of compressor 21 is lower than a second set temperature (zone A in FIG. 2), which is lower than the operation upper limit temperature by a second predetermined temperature, and compressor 21 is operating at a target operation rotational speed or is operating while shifting to the target rotational speed.

Accordingly, even if superheated refrigerant is bypassed at the start of bypassing when bypass expansion section 31 shifts from the closed state to the open state, and the discharge temperature is drastically increased, there is time until the operation upper limit temperature of compressor 21 is reached, and thus, main expansion valve 24 and bypass expansion valve 31 may each be controlled to an appropriate opening in the meantime.

Particularly, because the amount of pressure reduction at main expansion valve 24 is increased and an increase in the evaporation temperature is prevented, the refrigerant state at the inlet portion of bypass expansion section 31 is swiftly liquefied, and refrigerant at the outlet of bypass channel 3 may be placed in the saturation state in a short time. Therefore, an abnormal increase in the discharge temperature of compressor 21 may be suppressed.

Furthermore, even if the discharge temperature of compressor 21 is drastically increased at the start of bypassing when bypass expansion section 31 is shifted from the closed state to the open state, refrigerant which was dissolved in oil in compressor 21 is evaporated and there is almost no dissolved refrigerant, and oil in compressor 21 may be prevented from being drastically reduced.

Accordingly, damage to compressor 21 due to poor oil supply, reduction in performance due to an increase in an amount of oil circulation in the refrigeration cycle, and the like may be prevented.

Furthermore, when the discharge temperature of compressor 21 is equal to or higher than the second set temperature (zone B in FIG. 2), control device 4 opens main expansion valve 24 to the maximum opening (including a substantially maximum opening), and causes compressor 21 to operate at a reduced rotational speed.

In the case where the discharge temperature of compressor 21 is already high, such as at the time of reactivation, the power consumption of compressor 21 may be reduced. Also, evaporation of refrigerant at evaporator 25 is suppressed, and enthalpy of refrigerant sucked into compressor 21 is reduced, and the discharge temperature of compressor 21 may be reduced to an appropriate temperature in a short time as shown by dot c in FIG. 3.

As described above, at the time of start of bypassing when bypass expansion section 31 is shifted from the closed state to the open state, the discharge temperature of compressor 21 is consistently at an appropriate temperature, and an abnormal increase in the discharge temperature of compressor 21 may reliably be suppressed under various operation conditions.

Additionally, the operation upper limit temperature of compressor 21 is a temperature at which operation of compressor 21 is stopped, taking into account durability of compressor 21 or the like, so that the discharge temperature of compressor 21 or a temperature of a main body of compressor 21 is not abnormally increased

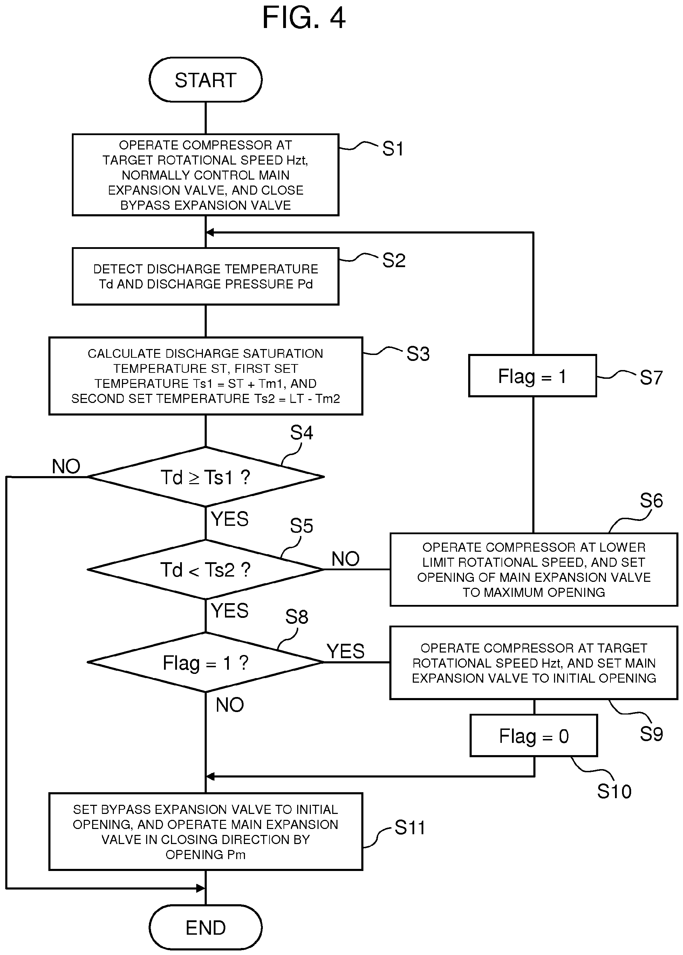

Next, a control specification at the time of normal operation of refrigeration cycle device 1A of the present exemplary embodiment will be specifically described with reference to the flowchart shown in FIG. 4.

In the present exemplary embodiment, at the time of normal operation, control device 4 operates bypass expansion valve 31 to shift from the closed state to the open state, when discharge temperature Td detected by temperature sensor 61 is equal to or higher than first set temperature Ts1, which is higher by first predetermined temperature Tm1 than discharge saturation temperature ST that is calculated based on discharge pressure Pd detected by pressure sensor 51, and is lower than second set temperature Ts2, which is lower by second predetermined temperature Tm2 than operation upper limit temperature LT of the discharge temperature of compressor 21, and the operation rotational speed of compressor 21 is at rotational speed Hzt, which is the target. Also, control device 4 reduces the opening of main expansion valve 24 by predetermined opening Pm.

Furthermore, when discharge temperature Td is equal to or higher than second set temperature Ts2, main expansion valve 24 is opened to the maximum opening (including a substantially maximum opening), and the rotational speed of compressor 21 is reduced.

Details will be given below. First, control device 4 operates compressor 21 at target rotational speed Hzt with bypass expansion valve 31 in the closed state, and normally controls main expansion valve 24 (step S1).

Then, discharge temperature Td and discharge pressure Pd are detected by pressure sensor 51 and temperature sensor 61 (step S2).

Next, control device 4 calculates discharge saturation temperature ST at the pressure of refrigerant discharged from compressor 21, based on discharge pressure Pd detected by pressure sensor 51, and calculates first set temperature Ts1, which takes a value obtained by adding first predetermined temperature Tm1 to discharge saturation temperature ST, and calculates second set temperature Ts2 by subtracting the second predetermined temperature Tm2 from operation upper limit temperature LT of the discharge temperature of compressor 21 (step S3). Calculation of discharge saturation temperature ST is performed by using a refrigerant property formula.

Then, control device 4 compares discharge temperature Td and first set temperature Ts1 against each other, and determines whether Td is equal to or higher than Ts1 (step S4).

In the case where discharge temperature Td is lower than first set temperature Ts1 (NO in step S4), control device 4 determines that the temperature of compressor 21 is low and that a large amount of refrigerant is possibly dissolved in oil in compressor 21, and continues operation while maintaining bypass expansion valve 31 in the closed state.

On the other hand, in the case where discharge temperature Td is equal to or higher than first set temperature Ts1 (YES in step S4), control device 4 determines that refrigerant is hardly dissolved in the oil in compressor 21, and then, determines whether discharge temperature Td is lower than second set temperature Ts2 (step S5).

In the case where discharge temperature Td is equal to or higher than second set temperature Ts2 (NO in step S5), control device 4 determines that there is not enough temperature difference between discharge temperature Td and operation upper limit temperature LT of compressor 21 and that the time until discharge temperature Td reaches operation upper limit temperature LT is short. Then control device 4 performs an operation of opening main expansion valve 24 to the maximum opening (including a substantially maximum opening), setting operation frequency of compressor 21 to a lower limit rotational speed, and reducing discharge temperature Td (step S6).

Then, control device 4 sets to one a flag indicating that it is during reduction operation of discharge temperature Td (step S7), returns to step S2, and monitors discharge temperature Td again.

On the other hand, in the case where discharge temperature Td is lower than second set temperature Ts2 (YES in step S5), control device 4 determines that discharge temperature Td is within an appropriate temperature range in which bypass expansion valve 31 is to be operated in an opening direction. Then, control device 4 determines whether the flag of discharge temperature reduction operation is set to one (step S8).

In the case where the flag is other than one (NO in step S8), control device 4 determines that normal control is being performed and that bypassing can be started, and opens bypass expansion valve 31 from the closed state to an initial opening, and reduces the opening of main expansion valve 24 by predetermined opening Pm (step S11).

On the other hand, in the case where the flag is one (YES in step S8), control device 4 ends the discharge temperature reduction operation, sets the main expansion valve to an initial opening and sets the compressor to the target rotational speed (step S9), and then, sets the flag to zero (step S10), and proceeds to step S11.

During step S11, the rotational speed of compressor 21 does not have to be at the target rotational speed, but may be in the process of being increased.

As described above, in the present exemplary embodiment, refrigerant circuit 2 includes temperature sensor 61 for detecting a temperature of refrigerant discharged from compressor 21, pressure sensor 51 for detecting a pressure of the refrigerant discharged from compressor 21, and control device 4. Control device 4, at the time of normal operation, operates bypass expansion valve 31 to shift from the closed state to the open state and reduces the opening of main expansion valve 24 by a predetermined opening, when the discharge temperature of compressor 21 is equal to or higher than the first set temperature, which is higher than the discharge saturation temperature by the first predetermined temperature, and lower than the second set temperature, which is lower than the operation upper limit temperature of the discharge temperature of compressor 21 by the second predetermined temperature, and the operation rotational speed of compressor 21 is at the target rotational speed or compressor 21 is operating while shifting to the target rotational speed.

Accordingly, the refrigerant at the outlet of bypass channel 3 may be placed in the saturation state in a short time before the discharge temperature of compressor 21 reaches the operation upper limit temperature, and an abnormal increase in the discharge temperature of compressor 21 may be suppressed.

Also, because the amount of oil in compressor 21 is not drastically reduced, damage to compressor 21 or a reduction in the performance of the refrigeration cycle may be prevented.

Furthermore, when the discharge temperature of compressor 21 is equal to or higher than the second set temperature, control device 4 opens main expansion valve 24 to the maximum opening (including a substantially maximum opening), and operates compressor 21 at an operation frequency at a minimum rotational speed.

Accordingly, even in a case where the discharge temperature of compressor 21 is already high, such as at the time of reactivation, the opening of bypass expansion valve 31 may be increased after the discharge temperature of compressor 21 is reduced to an appropriate temperature in a short time, and thus, an abnormal increase in the discharge temperature of compressor 21 may be suppressed.

As described above, even when the ambient temperature is extremely low at -20°C, for example, an increased enthalpy difference effect at evaporator 25 due to heat exchange, at subcooling heat exchanger 23, between mainstream refrigerant and bypass refrigerant due to bypassing, and a pressure drop reduction effect at a refrigerant route on the low-pressure side due to bypassing of refrigerant may be utilized. Accordingly, a higher operation efficiency and sufficient heating capacity may be achieved.

Additionally, in FIG. 1, pressure sensor 51 is provided to refrigerant circuit 2 between compressor 21 and four-way valve 28, but pressure sensor 51 may be provided at any position of refrigerant circuit 2 as long as the position is between compressor 21 and main expansion valve 24.

Alternatively, pressure sensor 51 may be provided to bypass channel 3, on a downstream side of subcooling heat exchanger 23.

Furthermore, in the present exemplary embodiment, the discharge saturation temperature is calculated by pressure sensor 51, but temperatures of parts of refrigerant circuit 2 and radiator 22 where high-pressure two-phase refrigerant passes through may be detected to be used instead of the discharge saturation temperature.

Furthermore, bypass channel 3 does not necessarily have to be branched from refrigerant circuit 2 between subcooling heat exchanger 23 and main expansion valve 24, and may alternatively be branched from refrigerant circuit 2 between radiator 22 and subcooling heat exchanger 23.

Furthermore, a part for connecting bypass channel 3 does not necessarily have to be a suction pipe of compressor 21, and in the case of a compressor provided with an injection mechanism, bypass channel 3 may be connected to an injection port, for example.

Moreover, in FIG. 1, temperature sensor 61 is provided to refrigerant circuit 2 between compressor 21 and four-way valve 28, but temperature sensor 61 may be provided at any position of refrigerant circuit 2 as long as the position is between compressor 21 and radiator 22.

Moreover, the main expansion section and the bypass expansion section of the present disclosure do not necessarily have to be expansion valves, and may be expanders for recovering power from expanding refrigerant. In this case, the rotational speed of such an expander may be controlled by changing a load by an electrical generator connected to the expander, for example.

The present disclosure is particularly advantageous for a hot water heating device which generates hot water by a refrigeration cycle device, and which uses the hot water for heating.

## Claims

1. A refrigeration cycle device comprising:
a refrigerant circuit where a compressor, a radiator, a subcooling heat exchanger, a main expansion section, and an evaporator are connected in a circular manner;
a bypass channel that is branched from the refrigerant circuit between the radiator and the main expansion section, and that is connected, via the subcooling heat exchanger, to a compression chamber of the compressor or the refrigerant circuit between the evaporator and the compressor;
a bypass expansion section that is provided to the bypass channel, on an upstream side of the subcooling heat exchanger;
a saturation temperature detection unit for detecting a saturation temperature of refrigerant discharged from the compressor;
a temperature sensor for detecting a temperature of the refrigerant discharged from the compressor; and
a control device,
wherein the control device increases an opening of the bypass expansion section when the temperature of the refrigerant discharged from the compressor is equal to or higher than a temperature that is higher than the saturation temperature by a first predetermined temperature and is lower than a temperature that is lower than an operation upper limit temperature of the compressor by a second predetermined temperature.

2. The refrigeration cycle device according to claim 1, wherein the control device reduces an opening of the main expansion section when increasing the opening of the bypass expansion section to shift the bypass expansion section from a closed state to an open state.

3. The refrigeration cycle device according to claim 1 or 2, wherein, when the temperature of the refrigerant discharged from the compressor is equal to or higher than the temperature that is lower than the operation upper limit temperature of the compressor by the second predetermined temperature, the control device changes the opening of the main expansion section to a maximum opening and reduces a rotational speed of the compressor.

4. A hot water heating device comprising the refrigeration cycle device according to any one of claims 1 to 3.
